# EUROPÄISCHE PATENTSCHRIFT

(11) **EP 3 335 201 B1**
(45) Veröffentlichungstag und Bekanntmachung des Hinweises auf die Patenterteilung: **05.08.2020**
(21) Anmeldenummer: 16750816.7
(22) Anmeldetag: 09.08.2016
(51) Int. Cl.: G07F 11/46, G07F 11/58, G07F 17/00

(54) **VORRICHTUNG ZUR AUSGABE VON BACKWAREN**
DEVICE FOR DISTRIBUTING BAKED GOODS
DISPOSITIF DE DÉFOURNEMENT DE PRODUITS DE BOULANGERIE-PÂTISSERIE

(30) Priorität: 13.08.2015 DE 102015113398
(43) Veröffentlichungstag der Anmeldung: 20.06.2018
(73) Patentinhaber: R. Weiss Verpackungstechnik GmbH & Co. KG, 74564 Crailsheim (DE)
(72) Erfinder: WEISS, Reinald, 91626 Schopfloch (DE)
(74) Vertreter: Schlief, Thomas P.
(86) Internationale Anmeldenummer: PCT/EP2016/068968
(87) Internationale Veröffentlichungsnummer: WO 2017/025539

(56) Entgegenhaltungen:
- EP-A2- 1 688 042
- DE-A1-102005 012 536
- DE-A1-102005 057 866
- DE-A1-102009 026 620
- US-A- 4 687 119

## Beschreibung

Die vorliegende Erfindung betrifft eine Vorrichtung zur Ausgabe von Backwaren zum Kombinieren mit einem vorzuschaltenden Durchlaufbackofen. Die Vorrichtung weist Überführungsmittel zum Überführen von Backwaren aus einer Vorratseinheit zu Ausgabemitteln auf, wobei die Ausgabemittel die Backwaren zu einem Ausgabefach leiten. Die Ausgabemittel umfassen eine Fördereinrichtung sowie eine Abgabeeinrichtung, wobei die Abgabeeinrichtung von der Fördereinrichtung mit Backwaren beschickbar ist.

Derartige Vorrichtungen sind beispielsweise in Supermärkten zu finden, denen ein Durchlaufbackofen vorgeschaltet ist. Auf Kundenanforderung per Knopfdruck können verschiedene, frisch gebackene oder aufgebackene Backwaren von den Ausgabemitteln ausgegeben werden. Die Vorrichtung weist ein Gehäuse mit einer zur Kundenseite gerichteten Vorderfront auf, hinter der die Ausgabemittel und die Vorratseinheit angeordnet sind.

Aus der DE 10 2009 026 620 A1 ist eine Vorrichtung zur Ausgabe von Backwaren bekannt. Darin werden die Backwaren aus einem Durchlaufbackofen angeliefert und über einen Umlaufförderer mittels Schieber einerseits auf ein Förderband, das zu einer Wippe führt, und andererseits direkt auf diese Wippe geschoben. Die Wippe kann nach unten verschwenkt werden, so dass die Backware in ein Ausgabefach rutscht. Anschließend klappt die Wippe wieder nach oben und kann wieder mit einer Backware von dem Förderband oder dem Umlaufförderer bestückt werden. Nachteilig bei dieser Ausführung ist es, dass mehrere Arbeitsschritte nötig sind, um eine einzige Backware auszugeben, wie beispielweise das Bestücken der Wippe, das Hinunterschwenken, das wieder Hochklappen, die Neubestückung der Wippe, usw. Bei einer größeren Anzahl an kurz nacheinander auszugebenden Backwaren dauert der Ausgabevorgang somit relativ lange.

Aufgabe der vorliegenden Erfindung ist es, eine Vorrichtung zur Ausgabe von Backwaren zu schaffen, die schneller Backwaren an einen Kunden ausgeben kann.

Die Aufgabe wird gelöst durch eine Vorrichtung zur Ausgabe von Backwaren mit den Merkmalen des Anspruchs 1.

Vorgeschlagen wird eine Vorrichtung zur Ausgabe von Backwaren zum Kombinieren mit einem vorzuschaltenden, vorteilhafterweise automatisch bestückten Durchlaufbackofen. In dem Durchlaufbackofen werden die Backwaren gebacken oder aufgebacken, so dass für einen Kunden jederzeit frische Backwaren verfügbar sind. Die Vorrichtung umfasst zudem Überführungsmittel zum Überführen von Backwaren aus einer Vorratseinheit zu Ausgabemitteln, wobei die Ausgabemittel die Backwaren zu einem Ausgabefach leiten. In der Vorratseinheit werden die aufgebackenen Backwaren zumindest kurzfristig zwischengespeichert, so dass bei einer größeren Anfrage an Backwaren in der Vorratseinheit genügend Backwaren auf Reserve gehalten sind und die Anfrage schnell abgearbeitet werden kann.

Die Ausgabemittel umfassen erfindungsgemäß mindestens eine erste Fördereinrichtung mit einer ersten Abgabeeinrichtung sowie eine zweite Fördereinrichtung mit einer zweiten Abgabeeinrichtung, wobei die Abgabeeinrichtungen von der jeweiligen Fördereinrichtung mit Backwaren beschickbar sind. Beide Abgabeeinrichtungen können mindestens eine erste und eine zweite Position einnehmen. Die erste Abgabeeinrichtung ist derart ausgebildet, dass sie in ihrer ersten Position Backwaren von der ersten Fördereinrichtung empfängt und in ihrer zweiten Position an das Ausgabefach weiterleitet. Erfindungsgemäß sind die beiden Abgabeeinrichtungen derart ausgebildet und zueinander angeordnet, dass eine Backware von der zweiten Abgabeeinrichtung in deren zweiter Position auf die erste Abgabeeinrichtung gefördert wird, die sich hierbei in ihrer ersten oder ebenfalls in der zweiten Position befinden kann. Mit anderen Worten erfolgt die Abgabe aus der zweiten Abgabeeinrichtung über die erste Abgabeeinrichtung, so dass die erste Abgabeeinrichtung sowohl für die Abförderung mit anschließender Ausgabe von Backwaren der ersten als auch der zweiten Fördereinrichtung eingesetzt wird. Somit sind hohe Durchsatzmengen in Bezug auf die Backwaren realisierbar, da die Anförderung von Backwaren mittels der ersten und der zweiten Fördereinrichtung möglich ist. Die Steuerung, welche Backware über welche Abgabeeinrichtung ausgegeben wird, wird vorzugsweise mittels einer entsprechend ausgebildeten elektronischen Steuereinrichtung realisiert.

Erfindungsgemäß umfassen die erste und zweite Abgabeeinrichtung weiterhin jeweils ein Schwenkelement, insbesondere einen Schwenkarm oder eine Wippe. Diese Schwenkelemente leiten die Backwaren durch eine Schwenkbewegung aus der ersten in die zweite Position. Beim Verschwenken des Schwenkelements der ersten Abgabeeinrichtung wird vorzugsweise die Backware direkt in das Ausgabefach geleitet. Die Schwenkelemente weisen hierbei bevorzugt jeweils eine Auflagefläche auf, auf der die Backware in der jeweiligen Aufnahmeposition aufliegt. Das Schwenkelement der zweiten Abgabeeinrichtung kann daraufhin in die Abgabeposition verschwenken, so dass die Backware von der Auflagefläche in Richtung auf die erste Ausgabeeinrichtung rutscht. Das Schwenkelement der ersten Abgabeeinrichtung kann in die Abgabeposition verschwenken, so dass die Backware von der Auflagefläche in Richtung auf das Ausgabefach rutscht. Das Schwenkelement kann sich hierbei je nach Anordnung im Uhrzeigersinn oder gegen den Uhrzeigersinn drehen und ist somit sehr platzsparend ausgebildet. Es ist bevorzugt mittels eines Antriebs zwischen der Aufnahme- und der Abgabeposition drehbar.

Die Backwaren können gemäß der Erfindung von der zweiten Abgabeeinrichtung direkt auf die erste Abgabeeinrichtung geleitet werden. Die zumindest zwei Abgabeeinrichtungen bilden eine "Abgabekette", wobei eine Backware aus der zweiten Position der zweiten Abgabeeinrichtung über die zweite Position der ersten Abgabeeinrichtung in Richtung des Ausgabefachs geleitet wird. Die andere, kürzere Abgabekette sieht vor, dass Backwaren von der ersten Abgabeeinrichtung zum Ausgabefach geleitet werden. Bei diesem Vorgang ist die zweite Abgabeeinrichtung nicht involviert.

Durch die erfindungsgemäße Ausbildung der Fördereinrichtungen und Abgabeeinrichtungen können mehr Backwaren in kürzerer Zeit an das Ausgabefach geliefert werden. Außerdem können die beiden Fördereinrichtungen unabhängig voneinander mit insbesondere unterschiedlichen Backwaren beschickt werden, was ebenfalls die Ausgabegeschwindigkeit der Backwaren erhöht.

Die Unabhängigkeit bringt noch weitere Vorteile mit sich. Da beispielweise die Backwaren über beide Abgabeeinrichtungen oder nur über die erste Abgabeeinrichtung zum Ausgabefach geleitet werden können, können bei einem Fehlen von Backwaren auf einer Fördereinrichtung die Backwaren von der anderen Fördereinrichtung zum Ausgabefach geleitet werden. Es stehen somit mehr Transportwege zur Verfügung, so dass auch bei einem Ausfall einer Fördereinrichtung oder Abgabeeinrichtung die Backwaren noch über die andere Fördereinrichtung und Abgabeeinrichtung zum Ausgabefach geleitet werden können. Wenn die beiden Fördereinrichtungen und/oder Abgabeeinrichtungen parallel arbeiten, steht die doppelte Leistung zu Verfügung. Kundenaufträge können somit schneller abgearbeitet werden.

Bevorzugt liegen die Förderrichtungen, in welche die Backwaren von der ersten und zweiten Fördereinrichtung auf die ihr jeweils zugeordnete Abgabeeinrichtung gefördert werden, und die Abgaberichtungen, in welcher die Backwaren die erste bzw. zweite Abgabeeinrichtung in ihrer jeweiligen zweiten Position verlassen, in einer gemeinsamen Ebene. Diese Ausgestaltung ist extrem platzsparend und kann insbesondere entlang der Hinterseite der Vorderfront des Gehäuses der Vorrichtung vorgesehen sein, wobei die besagten Förder- und Abgaberichtungen in Richtung der Erstreckung der Gehäusefront verlaufen. Weiter in die Vorrichtung hinein können dann entsprechende Speicher und Übergabemittel für die Backwaren vorgesehen sein.

Es ist weiterhin bevorzugt, wenn die erste und die zweite Fördereinrichtung übereinander und parallel zueinander angeordnet sind, wobei die erste bzw. die zweite Abgabeeinrichtung an einem Ende der ersten bzw. zweiten Fördereinrichtung angeordnet sind. Somit können Backwaren übereinander einerseits von der ersten Fördereinrichtung zur ersten Abgabeeinrichtung und andererseits von der zweiten Fördereinrichtung zur zweiten Abgabeeinrichtung transportiert werden, dann auf ihre jeweilige Abgabeeinrichtung überführt und von dort schließlich ausgegeben werden. Hierzu ist die zweite Abgabeeinrichtung vorzugsweise oberhalb und weiter bevorzugt seitlich versetzt zur ersten Abgabeeinrichtung angeordnet.

Mindestens eine der Fördereinrichtungen und vorzugsweise beide umfassen vorteilhafterweise jeweils einen Linearförderer, insbesondere jeweils ein Förderband, mit dem die Backwaren nacheinander auf die zugehörige Abgabeeinrichtung gefördert werden. Eine solche Ausgestaltung ermöglicht einen schnellen und sicheren Transport, wobei zudem die Übergabe an die jeweilige Abgabeeinrichtung problemlos realisierbar ist. Außerdem können die Linearförderer platzsparend ausgebildet werden, da die Förderbänder nur eine geringe Höhe aufweisen. Die Förderbänder sind vorteilhafterweise getaktet, da die Abgabeeinrichtungen in aller Regel während ihrer Bewegung von der ersten Position in die zweite Position und zurück keine Backwaren aufnehmen. Hierzu werden die Fördereinrichtungen vorzugsweise elektronisch angesteuert, um die Backwaren getaktet auf die Abgabeeinrichtungen zu leiten. Zusätzlich können die Abgabeeinrichtungen Sensoren umfassen, welche die erste und/oder die zweite Position erkennen, so dass die Fördereinrichtungen erst wieder Backwaren auf die jeweilige Abgabeeinrichtung leiten, wenn die Sensoren die erste Position der Abgabeeinrichtungen erkennen. Vorzugsweise ist die erste Position bei beiden Abgabeeinrichtungen als eine Aufnahmeposition ausgebildet, in welcher die Backwaren von der jeweils zugehörigen Fördereinrichtung beschickt und gehalten werden. Die Abgabeeinrichtung empfängt somit die Backwaren in der ersten bzw. Aufnahmeposition, in der sie vorzugsweise solange lagern, bis sie durch Bewegung der Abgabeeinrichtung aus dieser ersten Position weiter geleitet werden können.

Ebenso ist es von Vorteil, wenn die zweite Position bei beiden Abgabeeinrichtungen als eine Abgabeposition ausgebildet ist, bei welcher die Backwaren weiter geleitet werden, und dass die Abgabeeinrichtungen zwischen der jeweiligen Aufnahmeposition und der jeweiligen Abgabeposition bewegbar sind. In den jeweiligen Abgabepositionen der Abgabeeinrichtungen können die Backwaren somit grundsätzlich weitergeleitet werden (falls keine nachgeordneten Hindernisse dies momentan verhindern). Nach Bewegung der jeweiligen Abgabeeinrichtung von der ersten in die zweite Position und dementsprechend der Abgabe der Backware, kann die entsprechende Abgabeeinrichtung wieder zurück in die erste bzw. Aufnahmeposition bewegt werden, so dass diese wieder mit neuen Backwaren beschickt werden kann. Somit kann eine Abgabe der Backwaren zeitlich abgestimmt werden. Außerdem bildet die Aufnahmeposition einen Zwischenspeicher für die Backwaren, so dass die Backwaren dort gespeichert und schneller ausgegeben werden können, um kurz aufeinanderfolgende Bestellaufträge von Kunden zügiger abwickeln zu können.

Die Abgabeeinrichtungen umfassen für die Bewegung zwischen der Aufnahme- und der Abgabeposition einen, vorzugsweise von einer Zentralsteuerung angesteuerten, Antrieb, wobei dieser beispielsweise als ein Servomotor, als ein pneumatischer und/oder als ein hydraulischer Kolben ausgebildet sein kann.

Ferner ist es vorteilhaft, wenn mindestens eine der Abgabeeinrichtungen und vorzugsweise beide eine Auflagefläche aufweisen, auf der die Backwaren in der ersten Position bzw. Aufnahmeposition aufliegen, und von welcher die Backwaren in der zweiten Position bzw. Abgabeposition in Richtung des Ausgabefachs geleitet werden. Die Backwaren können auf der Auflagefläche, insbesondere einer Auflagefläche aus Edelstahl, besonders gut gleiten, ohne Schaden zu nehmen. Die Auflagefläche kann dabei derart dimensioniert werden, dass mehrere Backwaren auf der Auflagefläche in der ersten bzw. Aufnahmeposition Platz finden, so dass die Abgabe von Backwaren weiter beschleunigt werden kann. Ein Kunde erhält somit in kurzer Zeit die von ihm gewünschten Backwaren. Aber auch die Aufnahme lediglich einer Backware ist durchaus möglich und in bestimmten Fällen erwünscht.

Besonders bevorzugt sind die beiden Abgabeeinrichtungen derart übereinander und seitlich versetzt zueinander angeordnet, dass deren Auflageflächen in ihrer jeweiligen zweiten Position bzw. Abgabeposition zwei schiefe, insbesondere parallele, besonders bevorzugt miteinander fluchtende, Ebenen ausbilden. Somit können die Backwaren, wenn beide Abgabeeinrichtungen in der zweiten Position sind, über beide Auflageflächen der Abgabeeinrichtungen in Richtung des Ausgabefachs gleiten. Die Auflageflächen der beiden Abgabeeinrichtungen bilden vorzugsweise eine einzige schiefe Ebene aus, so dass eine Backware sanft und ohne Beschädigung über die beiden Auflageflächen, insbesondere an deren Übergang, hinweg geleitet wird. Mittels dieser schiefen Ebene können die Backwaren auf einfache Weise in Richtung des Ausgabefachs geleitet werden.

Des Weiteren ist es von Vorteil, wenn die Auflagefläche in der ersten Position mindestens einer der Abgabeeinrichtungen - vorzugsweise beider - gegenüber der Förderrichtung der zugehörigen Fördereinrichtung geneigt ist und Backwaren von der zugehörigen Fördereinrichtung auf diese geneigte Auflagefläche transportiert werden. Durch die Neigung ist es möglich, dass die Backwaren sicher - ggf. zusätzlich an einer aufrechten Rückhaltewand anliegend - auf ihrer jeweiligen Auflagefläche in der ersten Position der jeweiligen Abgabeeinrichtung ruhen, bevor sie in deren zweiter Position weiter transportiert werden.

Die oben genannten geneigten Anordnungen der Auflageflächen der ersten und/oder der zweiten Abgabeeinrichtung (einerseits bei der Aufnahme, andererseits bei der Abgabe der Backwaren) sind vorzugsweise derart ausgerichtet, dass die Auflageflächen beim Verschwenken aus deren jeweiliger erster Position (Aufnahmeposition) in die zweite Position (Abgabeposition) und zurück jeweils eine Horizontalebene kreuzen. Hierbei rutscht die jeweilige Backware abwärts, wenn die entsprechende Auflagefläche auf ihrem Weg zur zweiten Abgabeposition die Horizontalebene überquert.

Bei einer vorteilhaften Ausführungsform sind zwei Abgabeeinrichtungen derart zueinander angeordnet, dass deren Auflageflächen von der Aufnahmeposition in die Abgabeposition in entgegengesetzte Richtungen bewegt werden. Dabei sind die Abgabeeinrichtungen vorteilhafterweise übereinander angeordnet, womit ein kompakter Aufbau realisiert werden kann. Wenn die Abgabeeinrichtungen entgegengesetzt bewegt werden, können außerdem die Backwaren aus unterschiedlichen, insbesondere entgegengesetzten, Richtungen zum Ausgabefach geleitet werden. In vergleichbarer Hinsicht ist es von Vorteil, wenn die Fördereinrichtungen ebenfalls von unterschiedlichen, insbesondere entgegengesetzten, Richtungen Backwaren zu den Abgabeeinrichtungen transportieren und diese beschicken. Beispielsweise können damit Backwaren von zwei oder mehr unterschiedlichen Vorratseinheiten und/oder von zwei oder mehr unterschiedlichen Durchlaufbacköfen zu dem Ausgabefach geleitet werden. Somit kann die Leistung der Vorrichtungen erhöht werden. Außerdem können die Vorratseinheiten unterschiedliche Backwaren beinhalten, so dass auch Aufträge von Kunden mit mehreren Sorten an Backwaren schneller abgearbeitet werden können.

Bei einer vorteilhaften Ausführungsform sind mindestens zwei Abgabeeinrichtungen nebeneinander angeordnet. Zusätzlich oder alternativ können auch mindestens zwei Fördereinrichtungen nebeneinander angeordnet sein. Damit können die Abgabeeinrichtungen und/oder die Fördereinrichtungen beispielsweise von zwei Vorratseinheiten mittels der Überführungsmittel mit Backwaren bestückt werden. Insbesondere können in den Vorratseinheiten verschiedene Sorten an Backwaren vorgehalten werden.

Bei einem weiteren Ausführungsbeispiel der Erfindung sind vorteilhafterweise beide Positionen, nämlich die erste und die zweite Position, der zweiten Abgabeeinrichtung derart ausgebildet, dass sie in ihrer ersten Position Backwaren zu der ersten Abgabeeinrichtung und in ihrer zweiten Position Backwaren zu einer weiteren Abgabeeinrichtung leitet. Bei dieser Ausführungsform ist somit vorzugsweise keine reine Aufnahmeposition der zweiten Abgabeeinrichtung vorgesehen. Stattdessen wird eine Backware, die von der zweiten Fördereinrichtung zur zweiten Abgabeeinrichtung geleitet wird, gleich weiter befördert und zwar - je nach ihrer Stellung - zur ersten Abgabeeinrichtung oder zu einer weiteren Abgabeeinrichtung. Die zweite Abgabeeinrichtung kann beispielsweise als Schwenkarm ausgebildet sein, der zwischen der ersten und der zweiten Position verschwenkt werden kann.

Eine weitere vorteilhafte Ausbildung der Erfindung sieht vor, dass die Vorratseinheit als Umlaufförderer ausgebildet ist, welcher eine Vielzahl von umlaufenden Trägern zum Speichern der gebackenen Backwaren umfasst. Der Umlaufförderer kann dabei von einem Durchlaufbackofen mit Backwaren beschickt werden. Damit steht zu jeder Zeit eine ausreichende Anzahl an Backwaren zur Verfügung, die an das Ausgabefach geleitet werden können. Zusätzlich oder alternativ kann auch der Durchlaufbackofen selbst die Vorratseinheit bilden. Dies hat den Vorteil, dass die Vorrichtung noch platzsparender ausgebildet sein kann, und Backwaren besonders frisch an den Kunden geliefert werden können.

Die Überführungsmittel, welche Backwaren von der oder den Vorratseinheiten zu den Fördereinrichtungen transportieren, umfassen vorzugsweise mehrere gesteuerte Schieber. Die Schieber können kostengünstig ausgebildet werden und weisen durch die Bewegung in nur eine Richtung einen geringen Platzbedarf auf. Die Schieber können elektronisch, hydraulisch und/oder pneumatisch angesteuert werden.

Alternativ oder zusätzlich können die Überführungsmittel Abwurfmittel umfassen, mittels denen die Backwaren von den Trägern des Umlaufförderers abgeworfen werden können. Die Abwurfmittel können als Stopper ausgebildet sein, so dass der Träger an dem Stopper gekippt wird und die Backwaren von dem Träger herunter rutschen.

Vorteilhaft ist es auch, wenn die Überführungsmittel ein Zwischenlager für die Backwaren umfassen, von denen die Backwaren zu der Fördereinrichtung transportiert werden. Somit können die Kapazität der Vorrichtung und die Verfügbarkeit von Backwaren erhöht werden.

Ebenso ist es von Vorteil, wenn die erste und/oder die zweite Fördereinrichtung und die jeweils zugehörige Abgabeeinrichtung nebeneinander angeordnet sind und im Wesentlichen der Breite der Träger des Umlaufförderers entsprechen.

Bei einer vorteilhaften Weiterbildung der Erfindung sind zwei Förderrichtungen für Backwaren zur ersten und/oder zweiten Abgabeeinrichtung vorgesehen, einerseits durch eine direkte Förderung von einem der Überführungsmittel auf die Abgabeeinrichtung und andererseits durch eine Förderung von einer wie vorbeschriebenen Fördereinrichtung auf die Abgabeeinrichtung, wobei diese beiden Fördereinrichtungen im Wesentlichen senkrecht zueinander verlaufen. Hierdurch kann die Kompaktheit der Vorrichtung erhöht werden.

Weitere Vorteile der Erfindung sind in den nachfolgenden Ausführungsbeispielen beschrieben. Es zeigen:
- **Figur 1**: eine Seitenansicht einer Vorrichtung zur Ausgabe von Backwaren und einen Durchlaufbackofen,
- **Figur 2**: eine Vorderansicht von Ausgabemitteln einer Vorrichtung zur Ausgabe von Backwaren,
- **Figur 3**: eine Vorderansicht einer weiteren Ausführungsform von Ausgabemitteln einer Vorrichtung zur Ausgabe von Backwaren, und
- **Figur 4**: eine Vorderansicht einer weiteren Ausführungsform von Ausgabemitteln einer Vorrichtung zur Ausgabe von Backwaren mit vier Fördereinrichtungen und drei Abgabeeinrichtungen.

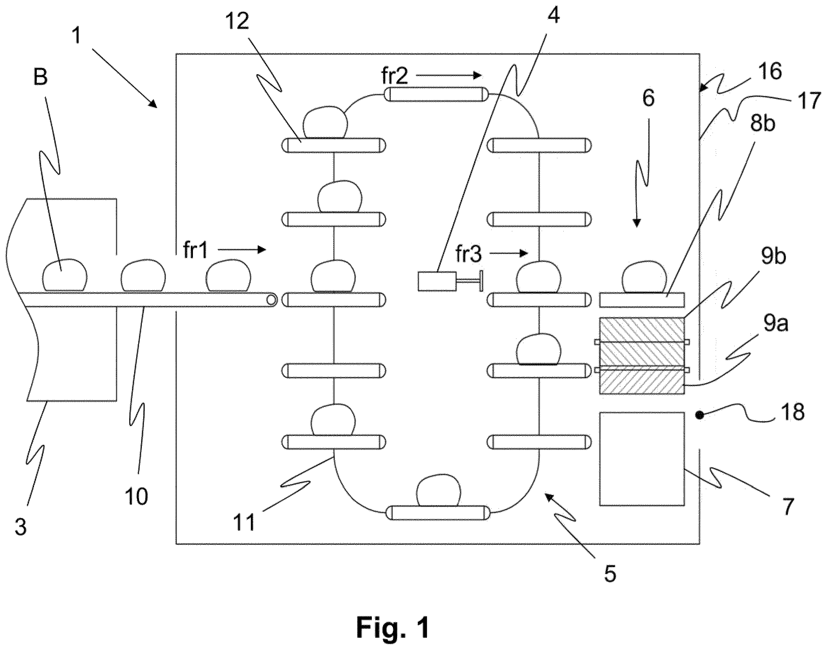

Figur 1 zeigt eine Seitenansicht einer Vorrichtung 1 zur Ausgabe von Backwaren B mit einem vorgeschalteten Durchlaufbackofen 3. Die Backwaren B (wovon der Einfachheit halber stets nur eine Backware mit einem Bezugszeichen gekennzeichnet ist) werden in dem Durchlaufbackofen 3 kontinuierlich frisch aufgebacken und gelangen über ein Förderband 10 aus dem Durchlaufbackofen 3 zu einer Vorratseinheit 5. Die Backwaren B werden auf dem Förderband 10 in der Förderrichtung fr1 in Richtung auf eine Vorratseinheit 5 aus dem Durchlaufbackofen 3 befördert.

Die Vorrichtung 1 ist in einem Gehäuse 16 untergebracht, welches eine Vorderfront 17 aufweist, die zur Kundenseite in einem Supermarkt gerichtet wird bzw. ist und insbesondere Informationstafeln, Backwaren-Anforderungs-Bedienelemente sowie eine Entnahmeöffnung 18 für einen Zugriff auf die ausgegebenen Backwaren aufweist. Gehäuse 16, Vorderfront 17 und Entnahmeöffnung 18 sind lediglich in der Fig. 1 dargestellt.

Die Vorratseinheit 5 ist vorliegend als Umlaufförderer 11 mit mehreren daran angeordneten Trägern 12 ausgebildet. Der Umlaufförderer 11 bewegt sich in der Förderrichtung fr2 auf einer umlaufenden, endlosen Bahn. Auf den Trägern 12 können Backwaren B transportiert und zwischengespeichert werden. Erreicht eine Backware B ein Überführungsmittel 4, kann es von diesem in der Förderrichtung fr3 von dem Träger 12 geschoben werden. Das Überführungsmittel 4 ist in diesem Ausführungsbeispiel als Schieber ausgeführt, der die Backwaren B mittels einer Schubbewegung in der Förderrichtung fr3 von dem Träger 12 auf die Ausgabemittel 6 schiebt.

Alternativ kann auch der Durchlaufbackofen 3, insbesondere das Förderband 10, als Vorratseinheit 5 genutzt werden. Somit könnte auf den Umlaufförderer 11 und die Träger 12 verzichtet werden, um so die Vorrichtung 1 noch platzsparender auszubilden.

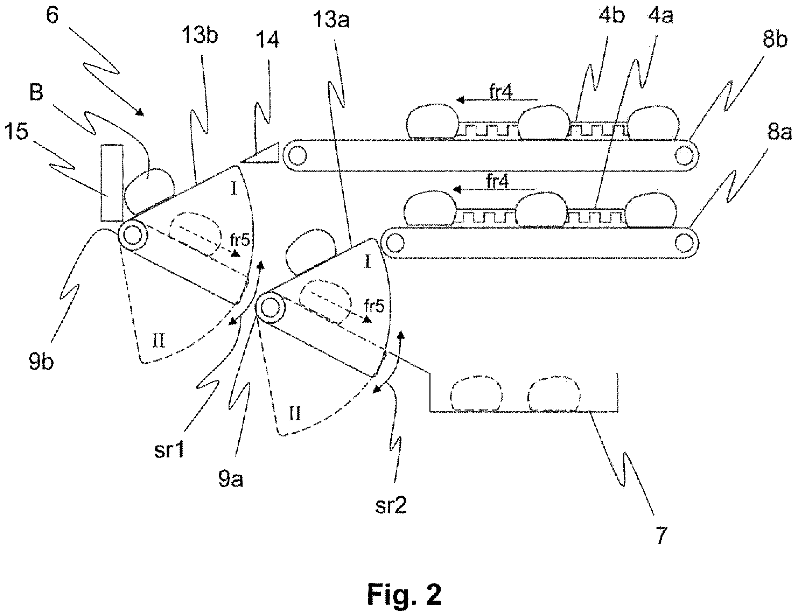

Die Ausgabemittel 6 umfassen eine erste Fördereinrichtung 8a und eine zweite Fördereinrichtung 8b (wovon in dieser Seitenansicht nur die zweite Fördereinrichtung 8b gezeigt ist) und eine der ersten Fördereinrichtung 8a zugeordnete erste Abgabeeinrichtung 9a und eine der zweiten Fördereinrichtung 8b zugeordnete zweite Abgabeeinrichtung 9b, welche die Backwaren B zu einem Ausgabefach 7 weiterleiten. Die Fördereinrichtungen 8a, 8b sind vorliegend als Förderbänder ausgebildet, welche Backwaren in Förderrichtung fr4 (vgl. Figur 2) fördern, wobei die Förderrichtung fr4 senkrecht zur Förderrichtung fr3 ausgerichtet ist.

Die Figur 2 zeigt eine Vorderansicht von Ausgabemitteln 6 einer Vorrichtung 1 zur Ausgabe von Backwaren B, wobei diese Vorrichtung 1 insbesondere derjenigen der Figur 1 entsprechen kann. Die Ausgabemittel 6 umfassen in diesem Ausführungsbeispiel die zwei Fördereinrichtungen 8a, 8b sowie die zwei Abgabeeinrichtungen 9a, 9b. Die Fördereinrichtungen 8a, 8b sind wiederum als Förderbänder ausgebildet, so dass die Backwaren B in Förderrichtung fr4 in Richtung der Abgabeeinrichtungen 9a, 9b geleitet werden können, die an einem gemeinsamen Ende der beiden Fördereinrichtungen 8a, 8b angeordnet sind. Die Backwaren B werden von den Überführungsmitteln 4a, 4b, welche hier als Schieber ausgebildet sind, von der Vorratseinheit 5 (vgl. Figur 1) auf die Fördereinrichtungen 8a, 8b geschoben. Dieses Ausführungsbeispiel weist zwei Überführungsmittel 4a, 4b auf, so dass Backwaren B von zwei Trägern 12 (vgl. Figur 1) der Vorratseinheit 5 auf die Fördereinrichtungen 8a, 8b geschoben werden können. Die Schieber weisen eine derartige Breite auf, dass vorliegend drei Backwaren B verschoben werden können. In einem alternativen Ausführungsbeispiel können die Schieber auch breiter oder schmaler ausgebildet sein, so dass mehr oder weniger Backwaren B (selbstverständlich auch in Abhängigkeit von deren Länge) verschiebbar sind.

Durch die Bewegung in Förderrichtung fr4 gelangen die Backwaren B zu den Abgabeeinrichtungen 9a, 9b, welche jeweils eine Auflagefläche 13a, 13b zur Aufnahme der Backwaren B aufweisen. Die Auflageflächen 13a, 13b können dabei derart dimensioniert werden, dass mehrere Backwaren B darauf Platz finden. Eine weitere Bewegung der Backwaren B auf insbesondere die Auflagefläche 13b ist mittels eines Begrenzungselements 15 begrenzt. In diesem Ausführungsbeispiel ist das Begrenzungselement 15 als ein separates Bauteil der Vorrichtung 1 ausgebildet. Alternativ könnte das Begrenzungselement 15 auch als Teil der Abgabeeinrichtung 9b ausgebildet sein.

Zwischen der Fördereinrichtung 8b und der Abgabeeinrichtung 9b ist des Weiteren ein optionales Rampenelement 14 angeordnet, das einen Abstand zwischen diesen beiden überbrückt, wobei die Backwaren B über das Rampenelement 14 hinweg geleitet werden.

Die Abgabeeinrichtungen 9a, 9b sind in diesem Ausführungsbeispiel übereinander und seitlich versetzt zueinander angeordnet und als Schwenkelemente, insbesondere als Wippen, ausgebildet. Die Abgabeeinrichtungen 9a, 9b sind entsprechend der Fig. 2 jeweils in einer ersten Position bzw. Aufnahmeposition I orientiert (Darstellung mit durchgezogenen Linien), so dass die Backwaren B gehalten sind und auf den Auflageflächen 13a, 13b aufliegen. Mittels eines Verschwenkens in den Schwenkrichtungen sr1, sr2 sind die Abgabeeinrichtungen 9a, 9b in eine zweite Position bzw. Abgabeposition II bewegbar (gestrichelte Darstellung), wobei die Backwaren B selbstständig über die Auflageflächen 13b, 13a in der Förderrichtung fr5 in das Ausgabefach 7 rutschen, worin die Backwaren B von dem Kunden entnehmbar sind. Die beiden Auflageflächen 13a, 13b fluchten hierbei miteinander und bilden eine schiefe Ebene aus, entlang derer die Backwaren in das Ausgabefach rutschen. Die beiden Schwenkrichtungen sr1, sr2 sind dabei jeweils gleich orientiert, d.h. beide Abgabeeinrichtungen 9a, 9b verschwenken jeweils - unter jeweiligem Kreuzen einer Horizontalebene seitens ihrer Auflageflächen 13a, 13b - von der Aufnahmeposition I in die Abgabeposition II mit dem gleichen Drehsinn.

Die beiden Förderrichtungen fr4 und fr5 liegen vorliegend in einer gemeinsamen Ebene, die hinter der Vorderfront 17 des Gehäuses 16 verläuft (dies gilt für alle in den Figuren 1 bis 4 gezeigten Ausführungsbeispielen). Durch diese Ausgestaltung kann die Vorrichtung mit einer sehr geringen Tiefe gebaut werden, so dass nur eine entsprechend geringe Stellfläche der Vorrichtung 1 in einem Supermarkt o.ä. benötigt wird.

Insbesondere sind die beiden Abgabeeinrichtungen 9a, 9b derart angeordnet, dass die Backwaren B von der Abgabeeinrichtung 9b direkt auf die Abgabeeinrichtung 9a geleitet werden. Mittels dieser Anordnung werden die Backwaren B von den beiden Fördereinrichtungen 8a, 8b zusammengeführt, so dass die Abgabeeinrichtungen 9a, 9b und die Fördereinrichtungen 8a, 8b besonders wenig Platz einnehmen.

In dem Ausführungsbeispiel in Figur 2 können mehrere Transportwege für die Backwaren B ausgebildet werden. So können beispielsweise nur Backwaren B von der Vorratseinheit 5 an die Fördereinrichtung 8b geliefert werden. Dann werden die Backwaren mittels des Förderbandes der Fördereinrichtung 8b in der Förderrichtung fr4 über das Rampenelement 14 an die Abgabeeinrichtung 9b geleitet. Mittels Verschwenkens der Abgabeeinrichtung 9b von der Aufnahmeposition I in die Abgabeposition II rutschen die Backwaren B über die Auflagefläche 13b hinweg. Die Abgabeeinrichtung 9a ist dabei vorzugsweise ständig in der Abgabeposition II orientiert, so dass die Backwaren B auch über die Auflagefläche 13a rutschen und in das Ausgabefach 7 geleitet werden. Auch hier bilden die beiden Auflageflächen 13a, 13b der beiden in Abgabeposition II befindlichen Abgabeeinrichtungen 9a, 9b eine gemeinsame schiefe Ebene aus, entlang derer die Backwaren in das Ausgabefach 7 rutschen.

Außerdem ist auch ein paralleler Betrieb der Fördereinrichtungen 8a, 8b sowie der Abgabeeinrichtungen 9a, 9b realisierbar. Wenn beide Abgabeeinrichtungen 9a, 9b mit Backwaren B beschickt sind, schwenken beide in die Abgabeposition II, so dass beide gleichzeitig deren Backwaren B freigeben könne. Hierbei rutschen die Backwaren nacheinander in das Ausgabefach 7. Damit kann die Leistung der Vorrichtung 1 im Wesentlichen verdoppelt werden.

Ein zusätzlicher Vorteil der Abgabeeinrichtungen 9a, 9b ist es, dass die Backwaren B schonend von den Fördereinrichtungen 8a, 8b erhalten werden.

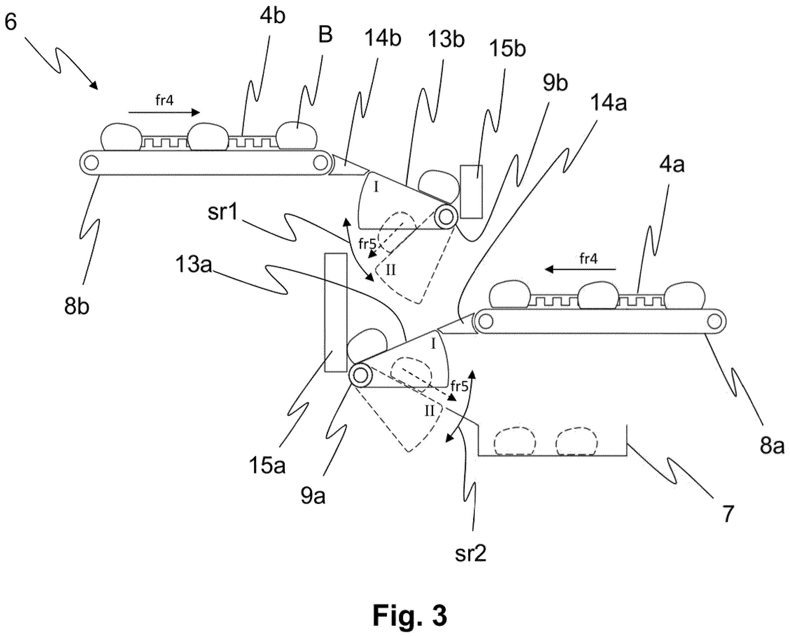

Die Figur 3 zeigt eine Vorderansicht einer weiteren Ausführungsform von Ausgabemitteln 6 einer Vorrichtung 1 zur Ausgabe von Backwaren B. Die Ausgabemittel 6 umfassen eine erste Fördereinrichtung 8a und eine zweite Fördereinrichtung 8b sowie eine erste und eine zweite Abgabeeinrichtung 9a, 9b. Die beiden Abgabeeinrichtungen 9a, 9b sind vorliegend übereinander angeordnet, während die Fördereinrichtungen 8a, 8b auch verschieden hoch, aber seitlich versetzt zueinander angeordnet sind, wobei die beiden Zuführrichtungen fr4 zu den beiden Abgabeeinrichtungen 9a, 9b entgegengesetzt sind. Die Fördereinrichtungen 8a, 8b fördern die Backwaren B in den Förderrichtungen fr4 über die jeweiligen Rampenelemente 14a, 14b auf die Auflageflächen 13a, 13b der Abgabeeinrichtungen 9a, 9b, die sich in ihren Aufnahmepositionen I befinden. In diesem Ausführungsbeispiel sind die Abgabeeinrichtungen 9a, 9b als Schwenkelemente, insbesondere als Wippen, ausgebildet, welche zwischen ihrer jeweiligen Aufnahmeposition I und einer Abgabeposition II um die jeweiligen Schwenkrichtungen sr1, sr2 verschwenkbar sind. Die beiden Schwenkrichtungen sr1, sr2 weisen in diesem Ausführungsbeispiel einen gegenläufigen Drehsinn auf, wenn beiden Abgabeeinrichtungen 9a, 9b von der Aufnahmeposition I in die Abgabeposition II verschwenkt werden.

Ist beispielsweise eine Backware B auf der Auflagefläche 13b der Abgabeeinrichtung 9b angeordnet, kann die Abgabeeinrichtung 9b nach unten in die Abgabeposition II geschwenkt werden und die Backware B rutscht in Förderrichtung fr5 von der Auflagefläche 13b. Die Backware B kommt auf der Auflagefläche 13a zum Liegen und wird mittels des Begrenzungselements 15a an einem Herunterrutschen von der Auflagefläche 13a der Abgabeeinrichtung 9a in der Aufnahmeposition I gehindert. Zusätzlich oder alternativ kann auf der Auflagefläche 13a bereits eine Backware B aufliegen, so dass durch den eben beschriebenen Vorgang eine zweite Backware B hinzukommt.

Alternativ kann auch nur eine Backware B von der Fördereinrichtung 8a in Förderrichtung fr4 auf die Abgabeeinrichtung 9a geleitet werden, die durch Verschwenken der Abgabeeinrichtung 9a von der Aufnahmeposition I in die Abgabeposition II in das Ausgabefach 7 geleitet wird.

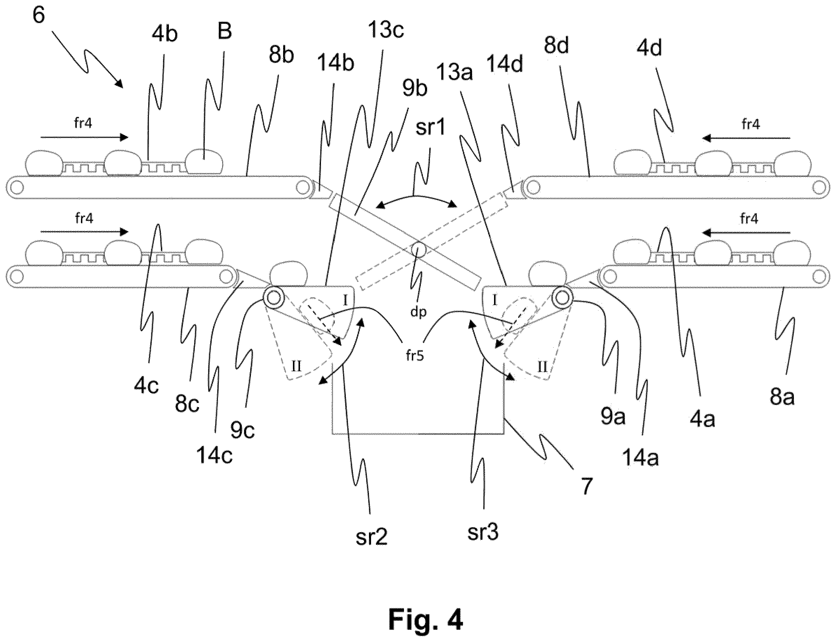

Wie oben beschrieben sind in dem Ausführungsbeispiel gemäß der Fig. 3 die Fördereinrichtungen 8a, 8b in der Höhe und seitlich versetzt angeordnet, so dass die Backwaren B von zwei verschiedenen Vorratseinheiten 5 auf die Fördereinrichtungen 8a, 8b gelangen können. Dies hat beispielsweise den Vorteil, dass die beiden Vorratseinheiten 5 mit verschiedenen Backwaren B bestückt werden können, so dass gleichzeitig verschiedene Sorten Backwaren zum Ausgabefach 7 geleitet werden können. Dies beschleunigt einen Ausgabevorgang von verschiedenen Backwaren B aus der Vorrichtung 1. Die Figur 4 zeigt eine Vorderansicht einer weiteren Ausführungsform von Ausgabemitteln 6 einer Vorrichtung 1 zur Ausgabe von Backwaren B mit vier Fördereinrichtungen 8a, 8b, 8c, 8d und drei Abgabeeinrichtungen 9a, 9b, 9c. Die Fördereinrichtungen 8b, 8c sind übereinander angeordnet und zu den ebenfalls übereinander angeordnet Fördereinrichtungen 8d, 8a benachbart angeordnet. Dies hat den Vorteil, dass die beiden Fördereinrichtungen 8b, 8c sowie die beiden Fördereinrichtungen 8d, 8a von jeweils zwei verschiedenen Vorratseinheiten 5 mit ggf. verschiedenen Sorten Backwaren B bestückt werden können.

Die Abgabeeinrichtung 9b ist in diesem Ausführungsbeispiel als ein Drehelement ausgebildet, das um einen Drehpunkt dp gedreht werden kann. Mittels der Abgabeeinrichtung 9b können die Backwaren B von der Fördereinrichtung 8b zu der diagonal dazu angeordneten Abgabeeinrichtung 9a geleitet werden, so dass diese auf der Auflagefläche 13a aufliegen und in der Aufnahmeposition I der Abgabeeinrichtung 9a gehalten werden. Die Abgabeeinrichtung 9b kann in der Schwenkrichtung sr1 rotiert werden (Abgabeeinrichtung 9b gestrichelt dargestellt), so dass die Abgabeeinrichtung 9b die Backwaren B von der Fördereinrichtung 8d zu der diagonal dazu angeordneten Abgabeeinrichtung 9c leitet. Die Backwaren B liegen auf der Auflagefläche 13c auf und sind in der Aufnahmeposition I der Abgabeeinrichtung 9c gehalten.

Die Abgabeeinrichtungen 9a bzw. 9c können ebenfalls von den Fördereinrichtungen 8a bzw. 8c in der oben beschriebenen Art und Weise mit Backwaren B beliefert werden. Befinden sich auf der Auflagefläche 13a, 13c der Abgabeeinrichtungen 9a, 9c die Backwaren B, können diese in den Schwenkrichtungen sr2, sr3 in Richtung des Ausgabefachs 7 bewegt werden, so dass die Backwaren B über die Auflageflächen 13a, 13c in der Förderrichtung fr5 in das Ausgabefach 7 geleitet werden. Dort sind die Backwaren B für den Kunden durch beispielsweise eine Entnahmeöffnung 18 entnehmbar.

In dem Ausführungsbeispiel der Figur 4 sind somit mehrere Transportwege von Backwaren B aus Vorratseinheiten 5 zu dem Ausgabefach 7 möglich. Beispielsweise können kontinuierlich Backwaren B auf die Fördereinrichtung 8a geleitet und über die Abgabeeinrichtung 9a zum Ausgabefach 7 geleitet werden. Parallel dazu können Backwaren B von der Fördereinrichtung 8d über die Abgabeeinrichtung 9b oder über die Fördereinrichtung 8c zur Abgabeeinrichtung 9c geleitet werden. Durch Verschwenken der Abgabeeinrichtung 9c können die Backwaren B dann ebenfalls in das Ausgabefach 7 geleitet werden. Somit kann auch ein Fehlen von Backwaren B auf einer Fördereinrichtung 8a, 8b, 8c, 8d durch einen anderen Transportweg kompensiert werden, ohne dass der Kunde eine längere Zeit auf die Backwaren B warten muss. Insbesondere kann durch ein Umschwenken der Abgabeeinrichtung 9b von einer Förderung mittels der Fördereinrichtung 8b zur Abgabeeinrichtung 9a auf eine Förderung mittels der Fördereinrichtung 8d zur Abgabeeinrichtung 9c umgeschaltet werden.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Vorrichtung zur Ausgabe von Backwaren
- 3: Durchlaufbackofen
- 4a-4d: Überführungsmittel
- 5: Vorratseinheit
- 6: Ausgabemittel
- 7: Ausgabefach
- 8a-8d: Fördereinrichtung
- 9a-9c: Abgabeeinrichtung
- 10: Förderband
- 11: Umlaufförderer
- 12: Träger
- 13a-13b: Auflagefläche
- 14a-14d: Rampenelement
- 151,15b: Begrenzungselement
- 16: Gehäuse
- 17: Vorderfront
- 18: Entnahmeöffnung
- SR: Schwenkrichtung
- I: Aufnahmeposition
- II: Abgabeposition
- fr1: Förderrichtung
- fr2: Förderrichtung
- fr3: Förderrichtung
- fr4: Förderrichtung
- fr5: Förderrichtung
- sr1: Schwenkrichtung
- sr2: Schwenkrichtung
- sr3: Schwenkrichtung
- dp: Drehpunkt
- B: Backwaren

## Patentansprüche

1. Vorrichtung zur Ausgabe von Backwaren (B) zum Kombinieren mit einem vorzuschaltenden Durchlaufbackofen (3), mit einer Vorratseinheit (5) zum Bevorraten von verzehrfertigen Backwaren (B), mit Überführungsmitteln (4) zum Überführen von Backwaren (B) aus der Vorratseinheit (5) zu Ausgabemitteln (6), welche die Backwaren (B) zu einem Ausgabefach (7) leiten, wobei die Ausgabemittel (6) eine erste Fördereinrichtung (8a) sowie eine erste Abgabeeinrichtung (9a) umfassen, die eine erste und eine zweite Position einnehmen kann, wobei die erste Abgabeeinrichtung (9a) in ihrer ersten Position von der ersten Fördereinrichtung (8a) mit mindestens einer Backware (B) beschickbar ist, um dann nach Überführen in ihre zweite Position diese Backware (B) zum Ausgabefach (7) abzugeben, **dadurch gekennzeichnet, dass** die Ausgabemittel (6) eine zweite Fördereinrichtung (8b) und eine zweite Abgabeeinrichtung (9b), die ebenfalls eine erste und eine zweite Position einnehmen kann, umfassen, wobei die beiden Abgabeeinrichtungen (9a, 9b) derart ausgebildet und zueinander angeordnet sind, dass eine Backware (B) von der zweiten Abgabeeinrichtung (9b) in deren zweiter Position auf die erste Abgabeeinrichtung (9a) förderbar und von dort in dessen zweiter Position zum Ausgabefach (7) abgebbar ist, wobei die mindestens erste und zweite Abgabeeinrichtung (9a, 9b) jeweils ein Schwenkelement, insbesondere einen Schwenkarm oder eine Wippe, mit jeweils einer Auflagefläche (13a, 13b) umfassen, wobei die Backwaren (B) durch eine Schwenkbewegung aus der ersten in die zweite Position durch Rutschen über die jeweilige Auflagefläche (13a, 13b) weitergeleitet werden.

2. Vorrichtung nach Anspruch 1, **dadurch gekennzeichnet, dass** die Förderrichtungen (fr4), in welche die Backwaren (B) von der ersten und zweiten Fördereinrichtung (8a, 8b) auf die jeweilige Abgabeeinrichtung (9a, 9b) gefördert werden, und die Abgaberichtungen (fr5), in welcher die Backwaren (B) die erste bzw. zweite Abgabeeinrichtung (9a, 9b) verlassen, in einer gemeinsamen Ebene liegen.

3. Vorrichtung nach Anspruch 1 oder 2, **dadurch gekennzeichnet, dass** die erste und die zweite Fördereinrichtung (8a, 8b) übereinander und parallel zueinander angeordnet sind, und dass die erste bzw. zweite Abgabeeinrichtung (9a, 9b) an einem gemeinsamen Ende der ersten bzw. zweiten Fördereinrichtung (8a, 8b) angeordnet sind.

4. Vorrichtung nach einem oder mehreren der vorherigen Ansprüche, **dadurch gekennzeichnet, dass** mindestens eine der Fördereinrichtungen (8b, 8a), vorzugsweise beide, einen Linearförderer, insbesondere ein Förderband, umfassen, welches die Backwaren (B), insbesondere getaktet, nacheinander auf die zugehörige Abgabeeinrichtung (9b, 9a) fördert.

5. Vorrichtung nach einem oder mehreren der vorherigen Ansprüche, **dadurch gekennzeichnet, dass** die erste Position bei beiden Abgabeeinrichtungen (9a, 9b) als eine Aufnahmeposition (I) ausgebildet ist, in welcher die Backwaren (B) von der jeweils zugehörigen Fördereinrichtung (8a, 8b) beschickt und gehalten werden, und dass die zweite Position bei beiden Abgabeeinrichtungen (9a, 9b) als eine Abgabeposition (II) ausgebildet ist, bei welcher die Backwaren (B) weiter geleitet werden, und dass die Abgabeeinrichtungen (9a, 9b) zwischen der jeweiligen Aufnahmeposition (I) und der jeweiligen Abgabeposition (II) hin- und her bewegbar sind.

6. Vorrichtung nach einem oder mehreren der vorherigen Ansprüche, **dadurch gekennzeichnet, dass** die Backwaren (B) in der ersten Position bzw. Aufnahmeposition (I) auf der besagten Auflagefläche (13a, 13b) aufliegen, und von der besagten Auflagefläche (13a, 13b) in der zweiten Position bzw. Abgabeposition (II) in Richtung des Ausgabefachs (7) geleitet werden.

7. Vorrichtung nach einem oder mehreren der vorherigen Ansprüche, **dadurch gekennzeichnet, dass** die beiden Abgabeeinrichtungen (9a, 9b) derart übereinander und seitlich versetzt zueinander angeordnet sind, dass die Auflageflächen (13a, 13b) der beiden Abgabeeinrichtungen (9a, 9b) in ihrer jeweiligen zweiten Position bzw. Abgabeposition (II) zwei schiefe, insbesondere parallele, besonders bevorzugt miteinander fluchtende Ebenen ausbilden, so dass die Backwaren (B) über beide Auflageflächen (13a, 13b) der Abgabeeinrichtungen (9a, 9b) hinweg in Richtung des Ausgabefachs (7) geleitet werden.

8. Vorrichtung nach einem oder mehreren der vorherigen Ansprüche, **dadurch gekennzeichnet, dass** die Auflagefläche (13a, 13b) in der ersten Position mindestens einer der Abgabeeinrichtungen (9a, 9b), vorzugsweise beider Abgabeeinrichtungen (9a, 9b), gegenüber der Förderrichtung der zugehörigen Fördereinrichtung (8a, 8b) geneigt ist und Backwaren (B) von der zugehörigen Fördereinrichtung (8a, 8b) auf diese geneigte Auflagefläche (13a, 13b) transportiert werden.

9. Vorrichtung nach einem oder mehreren der vorherigen Ansprüche, **dadurch gekennzeichnet, dass** die Auflagefläche (13a, 13b) der ersten und/oder der zweiten Abgabeeinrichtung (9a, 9b) beim Verschwenken von deren jeweiliger ersten in die zweite Position und zurück jeweils eine Horizontalebene kreuzt.

10. Vorrichtung nach einem oder mehreren der vorherigen Ansprüche, **dadurch gekennzeichnet, dass** zwei Abgabeeinrichtungen (9a, 9b) derart, insbesondere übereinander, angeordnet sind, dass die beiden Auflageflächen (13a, 13b) der beiden Abgabeeinrichtungen (9a, 9b) beim Bewegen, insbesondere Verschwenken, von der jeweiligen Aufnahmestellung (I) in die jeweilige Abgabestellung (II) entgegengesetzt bewegt, insbesondere verschwenkt, werden.

11. Vorrichtung nach einem oder mehreren der vorherigen Ansprüche, **dadurch gekennzeichnet, dass** mindestens zwei Abgabeeinrichtungen (9a, 9c) und/oder mindestens zwei Fördereinrichtungen (8a, 8c; 8b, 8d) nebeneinander angeordnet sind.

12. Vorrichtung nach einem oder mehreren der vorherigen Ansprüche, **dadurch gekennzeichnet, dass** eine zweite Abgabeeinrichtung (9b) in ihrer ersten Position Backwaren (B) zu der ersten Abgabeeinrichtung (9a) und in ihrer zweiten Position zu einer weiteren Abgabeeinrichtung (9c) zu leiten vermag.

13. Vorrichtung nach einem oder mehreren der vorherigen Ansprüche, **dadurch gekennzeichnet, dass** die Vorratseinheit (5) als ein Umlaufförderer (11) ausgebildet ist, welcher eine Vielzahl von umlaufenden Trägern (12) zum Speichern der gebackenen Backwaren (B) umfasst, und/oder die Vorratseinheit (5) ein Teil des Durchlaufbackofens (3) ist.

14. Vorrichtung nach einem oder mehreren der vorherigen Ansprüche, **dadurch gekennzeichnet, dass** die Überführungsmittel (4) mehrere, insbesondere elektronisch und/oder pneumatisch, gesteuerte Schieber umfassen, welche die Backwaren (B) auf die jeweilige Abgabeeinrichtung (9b, 9a) und/oder auf die Fördereinrichtung (8b, 8a) schieben, oder dass die Überführungsmittel (4) Abwurfmittel umfassen, mittels denen die Backwaren (B) von den Trägern (12) abgeworfen werden können.

## Claims

1. A device for discharging bakery goods (B), to be combined with an upstream continuous baking oven (3), said device having a storage unit (5) for storing ready-to-eat bakery goods (B), having transfer means (4) for transferring bakery goods (B) from the storage unit (5) to discharging means (6) which direct the bakery goods (B) to a discharging compartment (7), wherein the discharging means (6) comprise a first conveying installation (8a) and a first dispensing installation (9a), which can assume at least one first and one second position, wherein the first dispensing installation (9a) in the first position thereof is suppliable by the first conveying installation (8a) with at least one bakery goods item (B) in order for said first dispensing installation (9a), upon being moved to the second position thereof, to dispense said bakery goods item (B) to the discharging compartment (7), **characterized in that** the discharging means (6) comprise at least one second conveying installation (8b) and one second dispensing installation (9b), which likewise can assume at least one first and one second position, wherein the two dispensing installations (9a, 9b) are configured and mutually disposed in such a manner that a bakery goods item (B) is conveyable from the second dispensing installation (9b) in the second position thereof onto the first dispensing installation (9a) and, in the second position of the said first dispensing installation (9a), from there to the discharging compartment (7), wherein the at least first and second dispensing installations (9a, 9b) each comprise a pivoting element, especially a pivoting arm or a rocker, with a bearing face (13a, 13b) each, wherein the bakery goods (B), by way of a pivoting movement from the first position to the second position, are forwarded by sliding over the respective bearing face (13a, 13b).

2. The device as claimed in claim 1, **characterized in that** the conveying directions (fr4) in which the bakery goods (B) are conveyed by the first and the second conveying installation (8a, 8b) onto the respective dispensing installation (9a, 9b), and the dispensing directions (fr5) in which the bakery goods (B) leave the first or the second dispensing installation (9a, 9b), respectively, lie in a common plane.

3. The device as claimed in either of claims 1 and 2, **characterized in that** the first and the second conveying installation (8a, 8b) are disposed on top of one another and so as to be mutually parallel, and **in that** the first and the second dispensing installation (9a, 9b), respectively, are disposed at a common end of the first and the second conveying installation (8a, 8b), respectively.

4. The device as claimed in one or a plurality of the preceding claims, **characterized in that** at least one, preferably both, of the conveying installations (8b, 8a) comprise(s) a linear conveyor, in particular a conveyor belt, which conveys the bakery goods (B) sequentially, preferably in a cycled manner, onto the associated dispensing installation (9b, 9a).

5. The device as claimed in one or a plurality of the preceding claims, **characterized in that** the first position in the case of both dispensing installations (9a, 9b) is configured as a receiving position (I) in which the bakery goods (B) are supplied by the respective associated conveying installation (8a, 8b) and held, and **in that** the second position in the case of both dispensing installations (9a, 9b) is configured as a dispensing position (II) in which the bakery goods (B) are forwarded, and **in that** the dispensing installations (9a, 9b) are movable in a reciprocating manner between the respective receiving position (I) and the respective dispensing position (II).

6. The device as claimed in one or a plurality of the preceding claims, **characterized in that** the bakery goods (B) bear on said bearing face (13a, 13b) in the first position or the receiving position (I), respectively, and from which bearing face (13, 14) the bakery goods (B) in the second position or the dispensing position (II), respectively, are directed in the direction of the discharging compartment (7).

7. The device as claimed in one or a plurality of the preceding claims, **characterized in that** the two dispensing installations (9a, 9b) are disposed on top of one another and laterally mutually offset in such a manner that the bearing faces (13a, 13b) of the two dispensing installations (9a, 9b) in the respective second position or the dispensing position (II) thereof, respectively, configure two inclined, in particular parallel, particularly preferably mutually aligned, planes such that the bakery goods (B) are directed across both bearing faces (13a, 13b) of the dispensing installations (9a, 9b) in the direction of the discharging compartment (7).

8. The device as claimed in one or a plurality of the preceding claims, **characterized in that** the bearing face (13a, 13b) in the first position of at least one of the dispensing installations (9a, 9b), preferably of both dispensing installations (9a, 9b) is inclined in relation to the conveying direction of the associated conveying installation (8a, 8b), and bakery goods (B) are transported by the associated conveying installation (8a, 8b) onto said inclined bearing face (13a, 13b).

9. The device as claimed in one or a plurality of the preceding claims, **characterized in that** the bearing face (13a, 13b) of the first and/or of the second dispensing installation (9a, 9b) when pivoting from the respective first position thereof to the second position and back in each case crosses a horizontal plane.

10. The device as claimed in one or a plurality of the preceding claims, **characterized in that** two dispensing installations (9a, 9b) are disposed in particular on top of one another in such a manner that the two bearing faces (13a, 13b) of the two dispensing installations (9a, 9b) when moving, in particular pivoting, are moved, in particular pivoted, in an opposite manner from the respective receiving position (I) to the respective dispensing position (II).

11. The device as claimed in one or a plurality of the preceding claims, **characterized in that** at least two dispensing installations (9a, 9c), and/or at least two conveying installations (8a, 8c; 8b, 8d) are disposed beside one another.

12. The device as claimed in one or a plurality of the preceding claims, **characterized in that** a second dispensing installation (9b) in the first position thereof is capable of directing bakery goods (B) to the first dispensing installation (9a), and in the second position of said second dispensing installation (9b) is capable of directing bakery goods (B) to a further dispensing installation (9c).

13. The device as claimed in one or a plurality of the preceding claims, **characterized in that** the storage unit (5) is configured as a revolving conveyor (11) which comprises a multiplicity of revolving carriers (12) for storing the baked bakery goods (B), and/or the storage unit (5) is part of the continuous baking oven (3).

14. The device as claimed in one or a plurality of the preceding claims, **characterized in that** the transfer means (4) comprise a plurality of in particular electronically and/or pneumatically controlled slides which slide the bakery goods (B) onto the respective dispensing installation (9b, 9a) and/or onto the conveying installation (8b, 8a), or **in that** the transfer means (4) comprise drop-off means by means of which the bakery goods (B) can be dropped off from the carriers (12).

## Revendications

1. Dispositif pour la distribution de produits de boulangerie et de pâtisserie (B) destiné à être combiné avec un four tunnel (3) à installer en amont, avec une unité de réserve (5) pour le stockage de produits de boulangerie et de pâtisserie (B) prêts à la consommation, avec des moyens de transfert (4) pour le transfert de produits de boulangerie et de pâtisserie (B) depuis l'unité de réserve (5) vers des moyens de distribution (6) qui acheminent les produits de boulangerie et de pâtisserie (B) vers un compartiment de distribution (7), dans lequel les moyens de distribution (6) comprennent un premier dispositif de transport (8a) ainsi qu'un premier dispositif de distribution (9a) qui peut prendre une première et une seconde position, dans lequel le premier dispositif de distribution (9a), dans sa première position, peut être chargé avec au moins un produit de boulangerie et de pâtisserie (B) par le premier dispositif de transport (8a) pour ensuite, après transfert dans sa seconde position, délivrer ce produit de boulangerie et de pâtisserie (B) au compartiment de distribution (7), **caractérisé en ce que** les moyens de distribution (6) comprennent un second dispositif de transport (8b) et un second dispositif de distribution (9b) qui peut également prendre une première et une seconde position, dans lequel les deux dispositifs de distribution (9a, 9b) se présentent sous une forme et sont disposés l'un par rapport à l'autre de sorte qu'un produit de boulangerie et de pâtisserie (B) puisse être transporté du second dispositif de distribution (9b) dans sa seconde position sur le premier dispositif de distribution (9a) et, de là, dans sa seconde position, puisse être délivré dans le compartiment de distribution (7), dans lequel les au moins premier et second dispositifs de distribution (9a, 9b) comprennent chacun un élément pivotant, en particulier un bras pivotant ou une bascule, avec chacun une surface de support (13a, 13b), dans lequel les produits de boulangerie et de pâtisserie (B) sont acheminés par un mouvement de pivotement de la première à la seconde position, par glissement sur la surface de support (13a, 13b) respective.

2. Dispositif selon la revendication 1, **caractérisé en ce que** les directions de transport (fr4) dans lesquelles les produits de boulangerie et de pâtisserie (B) sont transportés des premier et second dispositifs de transport (8a, 8b) sur le dispositif de distribution (9a, 9b) respectif, et les directions de distribution (fr5) dans lesquelles les produits de boulangerie et de pâtisserie (B) quittent les premier et second dispositifs de distribution (9a, 9b), respectivement, sont situées dans un plan commun.

3. Dispositif selon la revendication 1 ou 2, **caractérisé en ce que** le premier et le second dispositifs de transport (8a, 8b) sont disposés l'un au-dessus de l'autre et parallèlement l'un à l'autre, et **en ce que** le premier ou le second dispositif de distribution (9a, 9b) sont disposés à une extrémité commune du premier ou du second dispositif de transport (8a, 8b).

4. Dispositif selon l'une quelconque ou plusieurs des revendications précédentes, **caractérisé en ce que** l'un au moins des dispositifs de transport (8b, 8a), de préférence les deux, comprend un convoyeur linéaire, en particulier une bande transporteuse, qui transporte les produits de boulangerie et de pâtisserie (B), en particulier de manière cadencée, les uns après les autres, sur le dispositif de distribution (9b, 9a) associé.

5. Dispositif selon l'une quelconque ou plusieurs des revendications précédentes, **caractérisé en ce que** la première position, aux deux dispositifs de distribution (9a, 9b), se présente sous la forme d'une position de réception (I) dans laquelle les produits de boulangerie et de pâtisserie (B) sont chargés et maintenus par le dispositif de transport (8a, 8b) respectivement associé, et que la seconde position, aux deux dispositifs de distribution (9a, 9b), se présente sous la forme d'une position de distribution (II) dans laquelle les produits de boulangerie et de pâtisserie (B) sont réacheminés, et que les dispositifs de distribution (9a, 9b) sont déplaçables en va-et-vient entre la position de réception (I) respective et la position de distribution (II) respective.

6. Dispositif selon l'une quelconque ou plusieurs des revendications précédentes, **caractérisé en ce que** les produits de boulangerie et de pâtisserie (B) reposent sur ladite surface de support (13a, 13b) dans la première position ou position de réception (I), et sont guidés depuis ladite surface de support (13a, 13b) dans la seconde position ou position de distribution (II) vers le compartiment de distribution (7).

7. Dispositif selon l'une quelconque ou plusieurs des revendications précédentes, **caractérisé en ce que** les deux dispositifs de distribution (9a, 9b) sont disposés l'un au-dessus de l'autre et décalés latéralement l'un par rapport à l'autre de sorte que les surfaces de support (13a, 13b) des deux dispositifs de distribution (9a, 9b), dans leur seconde position respective ou position de distribution (II), forment deux plans inclinés, en particulier parallèles, de manière particulièrement préférée, alignés l'un sur l'autre, de sorte que les produits de boulangerie et de pâtisserie (B) sont acheminés par-dessus les deux surfaces de support (13a, 13b) des dispositifs de distribution (9a, 9b) dans la direction du compartiment de distribution (7).

8. Dispositif selon l'une quelconque ou plusieurs des revendications précédentes, **caractérisé en ce que** la surface de support (13a, 13b), dans la première position de l'un au moins des dispositifs de distribution (9a, 9b), de préférence, des deux dispositifs de distribution (9a, 9b), est inclinée par rapport à la direction de transport du dispositif de transport (8a, 8b) associé et les produits de boulangerie et de pâtisserie (B) sont transportés du dispositif de transport (8a, 8b) associé sur cette surface de support (13a, 13b) inclinée.

9. Dispositif selon l'une quelconque ou plusieurs des revendications précédentes, **caractérisé en ce que** la surface de support (13a, 13b) du premier et/ou du second dispositif de distribution (9a, 9b) croise à chaque fois un plan horizontal lors du pivotement de sa première position respective à la seconde position et inversement.

10. Dispositif selon l'une quelconque ou plusieurs des revendications précédentes, **caractérisé en ce que** deux dispositifs de distribution (9a, 9b) sont disposés de telle manière, en particulier l'un au-dessus de l'autre, que les deux surfaces de support (13a, 13b) des deux dispositifs de distribution (9a, 9b), lors du déplacement, en particulier du pivotement, soient déplacées, en particulier pivotées, dans des directions opposées de la position de réception (I) respective dans la position de distribution (II) respective.

11. Dispositif selon l'une quelconque ou plusieurs des revendications précédentes, **caractérisé en ce que** deux dispositifs de distribution (9a, 9c) au moins et/ou deux dispositifs de transport (8a, 8c ; 8b, 8d) sont disposés l'un à côté de l'autre.

12. Dispositif selon l'une quelconque ou plusieurs des revendications précédentes, **caractérisé en ce qu'**un second dispositif de distribution (9b) est capable, dans sa première position, d'acheminer des produits de boulangerie et de pâtisserie (B) au premier dispositif de distribution (9a) et, dans sa seconde position, à un dispositif de distribution (9c) supplémentaire.

13. Dispositif selon l'une quelconque ou plusieurs des revendications précédentes, **caractérisé en ce que** l'unité de réserve (5) se présente sous la forme d'un convoyeur sans fin (11), lequel comprend une pluralité de supports (12) en circulation pour stocker les produits de boulangerie et de pâtisserie (B) cuits au four, et/ou l'unité de réserve (5) est une partie du four tunnel (3).

14. Dispositif selon l'une quelconque ou plusieurs des revendications précédentes, **caractérisé en ce que** les moyens de transfert (4) comprennent une pluralité de poussoirs, en particulier à commande électronique et/ou pneumatique, lesquels poussent les produits de boulangerie et de pâtisserie (B) sur le dispositif de distribution (9b, 9a) respectif et/ou sur le dispositif de transport (8b, 8a), ou **en ce que** les moyens de transfert (4) comprennent des moyens de largage au moyen desquels les produits de boulangerie et de pâtisserie (B) peuvent être largués depuis les supports (12).
